# FASCICULE DE BREVET EUROPEEN

(11) **EP 4 305 334 B1**
(45) Date de publication et mention de la délivrance du brevet: **07.10.2026**
(21) Numéro de dépôt: 22713438.4
(22) Date de dépôt: 04.03.2022
(51) Int. Cl.: F16L 41/12, F16L 41/00, G01L 9/00, A62C 35/68, F16B 2/08

(54) **DISPOSITIF DE PRISE EN CHARGE**
AUFNAHMEVORRICHTUNG
TAKE-UP DEVICE

(30) Priorité: 11.03.2021 FR 2102426; 28.05.2021 FR 2105559
(43) Date de publication de la demande: 17.01.2024
(73) Titulaire: GROUPE SAVE, 33700 Merignac (FR)
(72) Inventeur: KIBLER, Philippe, 69360 Ternay (FR)
(74) Mandataire: Ipsilon
(86) Numéro de dépôt international: PCT/FR2022/050393
(87) Numéro de publication internationale: WO 2022/189738

(56) Documents cités:
- WO-A1-2018/014066
- BR-U2- 202019 015 241
- CN-U- 209 302 086
- DE-A1- 3 812 189
- DE-U1- 20 106 522
- DE-U1- 9 106 943
- FR-A- 670 895
- FR-A1- 2 402 825
- FR-A1- 2 785 359
- FR-E- 41 233
- KR-A- 20070 106 101
- US-A- 2 884 265
- US-A- 3 663 042
- US-A- 4 019 581

## Description

### DOMAINE TECHNIQUE

La présente invention concerne le domaine des colliers de prise en charge permettant de connecter un dispositif tel qu'une conduite de dérivation ou un capteur de pression ou de température sur une canalisation principale.

L'invention porte en particulier sur un dispositif de prise en charge destiné à être monté sur une ouverture d'une canalisation incluant au moins un collier de serrage dont le diamètre s'adapte à plusieurs diamètres de canalisations.

L'invention permet notamment d' adapter *in situ* le dispositif de prise en charge à plusieurs types de canalisations préexistantes.

### ART ANTERIEUR

Il existe de nombreux dispositifs permettant de créer une dérivation sur une canalisation principale, pour y raccorder soit une autre conduite, soit un dispositif tel que par exemple un capteur de mesure.

Les dispositifs de dérivation de l'art antérieur, également connus sous le nom de « colliers de dérivation », ou encore de « colliers de prise en charge », sont traditionnellement constitués d'un socle rigide destiné à être positionnée de manière étanche, sur la canalisation principale, en regard d'un orifice de dérivation. Pour ce faire, le socle peut par exemple comporter une portion inférieure destinée à pénétrer dans l'orifice. Un joint peut également être disposé entre le socle et l'orifice de la canalisation. Les dispositifs de dérivation comportent en outre une bride flexible coopérant avec le socle pour le maintenir sur la conduite. Un dispositif selon l'art antérieur est connu de KR 2007 0106101 A.

Le document US9435476 décrit un dispositif de dérivation comportant une portion tubulaire en forme de coude. Une des extrémités du coude comporte un joint circulaire positionné de sorte à ce que l'extrémité du coude dépasse en dessous du joint. Cette extrémité est destinée à être insérée dans l'orifice de la canalisation principale. Le joint, de diamètre supérieur au diamètre de l'orifice, est destiné à reposer sur la canalisation pour la colmater. La bride est formée d'un collier circulaire comportant une ouverture centrale. Le collier est inséré autour de la portion tubulaire afin de faire reposer le collier sur le joint. Ainsi, lorsque le collier est refermé autour de la canalisation, il comprime le joint contre l'orifice de la canalisation.

Cependant, ce système ne permet pas d'adapter plusieurs types de dispositifs sur la canalisation. En effet, l'ouverture du collier comporte un diamètre fixe, qui limite les formes et les dimensions des dispositifs rapportés. En effet, le dispositif doit comporter une portion de diamètre inférieur ou égal à l'ouverture du collier pour pouvoir faire coulisser le collier sur le dispositif, et une portion de diamètre supérieur à l'ouverture pour que le collier puisse retenir le dispositif contre la canalisation.

Le document DE3812189 décrit un dispositif de dérivation comportant un tube fixé sur une canalisation au moyen d'un socle avec deux lanières perforées solidarisées à deux points d'attache du socle, les lanières perforées sont assemblées à l'opposé du socle par un dispositif vis-écrou pénétrant dans deux perforations des lanières. Cependant, l'adaptation du diamètre avec des moyens vis-écrou et des encoches cumulé au matériau métallique des lanières, ne permet pas d'obtenir une progressivité de serrage permettant de répondre aux contraintes de pression des extincteurs automatique à eau.

Le document FR2402825 décrit un collier adaptable pour le raccordement d'une conduite comportant un socle maintenu sur une ouverture de canalisation au moyen d'une lanière, cette dernière étant solidaire à deux points d'ancrage situés sur le socle. Le réglage de la longueur de la lanière s'effectue soit grâce aux moyens de réglages situés à l'opposé de l'ouverture permettant de positionner deux lanières et l'utilisation de barrettes comme points d'ancrage au niveau du socle, soit par le maintien de la lanière sur le socle en deux points d'ancrage.

Cependant, le moyen d'ancrage des lanières sur le socle ne permet pas d'avoir à la fois une seule lanière de maintien, deux points d'ancrage situés sur le socle, et un moyen de réglage situé à l'opposé de l'ouverture. Ainsi, l'adaptation du dispositif pour le support de fortes pressions peut induire une fragilité sur le bord de la lanière et à la jonction entre la lanière et le socle en cas d'utilisation de barrette de liaison, ou bien nécessiter l'utilisation de deux lanières.

Le document BR 202019015241 décrit un collier de prise en charge destiné à être positionné sur une canalisation. Le collier de prise en charge comporte un socle monobloc, un joint torique et des fentes latérales pour l'ancrage et le verrouillage d'une bande autobloquante.

Cependant, les moyens de réglage situés au niveau des fentes sont dépendants du socle et soumettent les points d'ancrage à de fortes contraintes, réduisant la durabilité des moyens de réglages associés, notamment en cas d'utilisation pour le support de fortes pressions.

Le document FR2933764 décrit un dispositif de dérivation comportant une selle munie d'une ouverture traversante comportant un filetage et permettant par exemple d'y visser un tuyau de dérivation. La selle comporte également des moyens de fixation d'une bande souple. Les moyens de fixation incluent une ouverture traversante, ménagée sur une extrémité de la selle et permettant d'insérer la bande souple et de la bloquer grâce à une languette. L'autre extrémité de la selle comporte un système de tige métallique pivotante permettant d'enrouler la bande souple. La tige et l'extrémité de la bande comportent une ouverture permettant d'accueillir une vis qui, d'une part, bloque la rotation de la tige, et d'autre part, maintient la bande sur la tige.

Ce système présente des moyens de fixation de la bande souple asymétriques, ce qui complexifie le montage du dispositif sur la canalisation. Par ailleurs, la mise en œuvre d'un tel dispositif est très complexe et couteuse.

Le problème technique que se propose de résoudre l'invention est donc de mettre au point un dispositif de dérivation adaptable à plusieurs diamètres de conduites et dont la mise en œuvre est plus facile et moins couteuse que les dispositifs de l'art antérieur, tout en étant apte à supporter de fortes pressions.

### DESCRIPTION DE L'INVENTION

Pour résoudre ce problème, l'invention propose de mettre au point un dispositif de prise en charge comportant au moins un collier de serrage réalisé dans un matériau souple permettant de l'adapter à la forme et à la taille de plusieurs types de canalisations.

Contre toutes attentes, les colliers de serrage souples de l'invention peuvent également se substituer aux colliers rigides de l'art antérieur destinés aux installations supportant de fortes pressions.

En effet, un homme du métier serait naturellement amené à penser que les colliers de serrage souples de l'invention présentent un risque trop important d'usure et de déformation, notamment lorsqu'ils sont soumis à des pressions comprises entre 5 et 20 bars et, plus précisément, entre 8 et 12 bars. Un homme du métier aurait ainsi évité d'utiliser ces colliers de serrage afin de limiter les risques de sécurité.

L'invention est donc issue d'une découverte selon laquelle un tel dispositif peut être adapté sur une canalisation au sein de laquelle règne une forte pression, typiquement une canalisation d'installation de protection incendie dans laquelle la pression est comprise entre 5 et 20 bars et plus précisément entre 8 et 12 bars.

Ainsi, l'invention traite d'un dispositif de prise en charge destiné à être monté sur une ouverture d'une canalisation, ladite canalisation étant comprise dans une installation, ledit dispositif comportant les caractéristiques de la revendication 1, et qui se distingue principalement de l'art antérieur en ce que les moyens de fixation sont de type vis autoforeuse et/ou bille contenue dans un tube à section variable.

Autrement formulé, les moyens de réglage permettent d'adapter la longueur du collier de serrage par rapport au diamètre de la canalisation. Par exemple, le collier peut présenter une longueur suffisante pour s'adapter à des diamètres compris entre 25 et 50 mm.

Pour obtenir cette capacité d'adaptation, les moyens de réglage peuvent se présenter sous la forme d'une boucle, coopérant avec des encoches ménagées dans l'élément longiligne.

Les moyens de réglages sont en outre indépendants du socle afin d'être positionnés dans une zone distante du socle et pouvoir ainsi mieux résister aux contraintes de pression s'exerçant sur l'ouverture de la canalisation. En effet, plus les moyens de réglage sont distants du socle, mieux le collier de serrage résiste à l'allongement, la déformation et la rupture.

De préférence, les moyens de réglage sont installés de manière diamétralement opposée à l'ouverture de la canalisation, pour compenser au mieux la force de pression s'exerçant sur le socle, depuis l'ouverture de la canalisation. La tension s'exerçant autour de la canalisation, elle est ainsi mieux répartie.

Selon l'invention, le socle est monobloc, c'est-à-dire que le socle est une pièce formée d'un seul tenant, par opposition à une pièce issue de l'assemblage de plusieurs éléments constitutifs, tel que décrit par exemple dans le document WO2018/014066. Compte tenu des fortes pressions exercées, l'utilisation d'un socle monobloc permet de garantir une résistance pérenne pour une durée garantie d'exploitation, pour exemple pour 5 ou 10 ans d'exploitation.

L'association du j oint, des moyens de réglage et de l'élément longiligne coopérant avec le socle, permet de garantir l'étanchéité de la connexion entre la canalisation et le dispositif de prise en charge ainsi que l'adaptabilité du collier de serrage à différents diamètres de canalisations. En effet, l'élément longiligne permet de presser le socle contre la canalisation alors que le joint, intercalé entre le socle et la canalisation, est comprimé. Sous la traction de l'élément longiligne sur le socle, le joint se déforme pour garantir l'étanchéité du socle autour du trou traversant de la canalisation et pour épouser la courbure de la canalisation. Ainsi, le joint sous la pression du socle permet d'absorber les différences de courbures entre la canalisation et le socle. En outre, les moyens de réglage permettent de sécuriser l'élément longiligne dans une position dans laquelle le joint est comprimé de sorte que la capacité de compression du joint vient également combler le manque de progressivité des positions de fixation des moyens de serrage.

Il s'ensuit que la traction exercée par l'élément longiligne sur le socle, la modularité des moyens de réglage et la capacité de déformation du joint permettent d'adapter le dispositif de prise en charge à des canalisations de diamètres variables.

Par ailleurs, les moyens de réglage et l'élément longiligne sont durables dans le temps, c'est-à-dire qu'ils ne se déforment pas et ne dérèglent pas au cours du temps. La connexion reste donc durablement étanche.

En outre, l'association des moyens de réglage et du joint permet également d'adapter la longueur du collier de serrage à des variations très faibles du diamètre de la canalisation, dues aux tolérances de fabrication. En effet, parmi les canalisations d'un diamètre donné, par exemple pour un diamètre de 25 mm, la tolérance du constructeur peut prévoir une marge de +/- 1mm au sein de laquelle le diamètre de la canalisation peut varier. De préférence, les encoches des moyens de réglage présentent un pas suffisamment réduit pour permettre l'adaptation à la tolérance du constructeur.

Le dispositif de dérivation peut être positionné avec n'importe quelle orientation par rapport à la canalisation, dès lors qu'il est fixé au niveau d'une ouverture de la canalisation. A titre d'exemple, le dispositif peut être positionné au-dessus de la canalisation, au-dessous ou sur le côté.

La longueur des colliers de serrage correspond à la portion utile des colliers, qui est destinée à être positionnée contre les parois de la canalisation. En effet, un collier de serrage peut présenter une longueur totale fixe, mais lors du réglage, seule une portion du collier peut être utilisée effectivement pour maintenir le dispositif de dérivation contre la canalisation. La portion non utile peut éventuellement être coupée pour ne pas gêner l'entretien de l'installation.

En outre, des colliers de serrage pouvant s'adapter à plusieurs diamètres de canalisations permettent de limiter le nombre de références de tailles de colliers différents, ce qui limite les couts de production. Par ailleurs, le réglage des colliers de serrage peut se faire de manière sensiblement continue.

Dans un mode de réalisation, le dispositif de prise en charge comporte un unique collier de serrage et uniquement deux points d'ancrage disposés de part et d'autre du socle.

En effet, un homme du métier penserait naturellement que les colliers de serrage souples de l'invention présentent un risque trop important d'usure et de déformation. Il serait ainsi amené à multiplier le nombre de colliers de serrage pour renforcer la structure du collier de serrage. Or, l'invention permet, contre toutes attentes, de n'utiliser qu'un unique collier de serrage sans pour autant augmenter les risques de fuites par exemple.

Au sens de l'invention, les « points d'ancrages » correspondent aux éléments de réception du socle permettant de fixer le collier de serrage lorsque le collier de serrage est enserré autour de la canalisation. Ces points d'ancrages peuvent correspondre à des ouvertures ou des excroissances, tels que des ergots.

Selon un mode de réalisation, les points d'ancrage sont des ouvertures traversantes orientées selon une direction parallèle à la direction principale de la canalisation, l'élément longiligne étant monté sur le socle en insérant au moins une extrémité de l'élément longiligne dans les ouvertures traversantes et en formant une boucle autour des bordures dudit socle.

Selon l'invention, la direction principale de la canalisation correspond à la direction parallèle à la longueur de la canalisation.

Le montage du collier de serrage sur le socle est ainsi facilité car la méthode de réglage est facilement reproductible et nécessite peu d'outils. A titre d'exemple, il suffit de traverser les deux ouvertures de bas en haut, de sorte que l'élément longiligne entoure la canalisation. Les extrémités de l'élément longiligne sont ensuite tirées depuis le dessus du socle et rabattues par-dessus les extrémités du socle pour serrer le collier de serrage autour de la canalisation. Les extrémités de l'élément longiligne sont ensuite ramenées ensemble et fixées par les moyens de réglage. L'installation des dispositifs de prise en charge sur les canalisations est ainsi globalement rendue plus rapide.

En pratique, les ouvertures traversantes peuvent correspondre à des fentes ménagées dans le socle. En variante, les ouvertures traversantes peuvent correspondre à l'espace formé entre le socle et un axe rapporté sur le socle.

De préférence, les ouvertures sont ménagées symétriquement par rapport à un axe central du socle, permettant ainsi de réduire les risques de mauvais positionnement du dispositif de prise en charge contre l'ouverture de la canalisation.

Selon une autre mode de réalisation, les deux extrémités de l'élément longiligne sont configurées pour coopérer avec les points d'ancrage disposés de part et d'autre du socle, de sorte que l'élément longiligne enserre partiellement la canalisation après action sur les moyens de réglage.

En pratique, chaque point d'ancrage comporte un logement délimité par deux ergots, séparés d'une fente dimensionnée pour permettre le passage de l'élément longiligne, le logement étant destiné à recevoir un axe fixé à une extrémité de l'élément longiligne, les ergots étant destinés à permettre l'insertion des axes dans les logements avant action sur les moyens de réglage et à bloquer l'extraction desdits axes après action sur les moyens de réglage.

Le montage du collier de serrage sur le socle est ainsi facilité car la méthode de réglage est facilement reproductible et nécessite peu d'outils. Il suffit que l'élément longiligne entoure la canalisation et que ses extrémités, munies d'un axe, soient bloquées dans les logements du socle. Le collier de serrage est ensuite adapté au diamètre de la canalisation via les moyens de réglage. L'installation des dispositifs de prise en charge sur les canalisations est ainsi globalement rendue plus rapide.

En variante, chaque point d'ancrage comprend un ergot destiné à coopérer avec un trou ménagé aux extrémités de l'élément longiligne.

Le montage du collier de serrage sur le socle s'effectue en montant l'élément longiligne autour de la canalisation de sorte que ses extrémités, munies d'un trou, soient bloquées sur les ergots du socle. Le collier de serrage est ensuite adapté au diamètre de la canalisation via les moyens de réglage.

L'élément longiligne peut prendre différentes formes. Dans une première forme, l'élément longiligne est un feuillard, c'est-à-dire, de forme similaire à un ruban. En variante, l'élément longiligne est un câble, plus fin mais néanmoins tout aussi résistant. En effet, l'invention permet d'utiliser des éléments longilignes dont la largeur est réduite sans compromettre la sécurité des installations.

En pratique, l'élément longiligne est formé dans un matériau métallique, car de manière surprenante, l'invention permet d'utiliser des matières métalliques différentes pour la réalisation de l'élément longiligne sans compromettre la sécurité des installations.

Avantageusement, les moyens de réglage de la longueur de l'au moins un collier de serrage comportent des repères permettant de comprimer le joint à un taux prédéterminé.

Ce mode de réalisation permet de faciliter l'installation du collier de serrage et d'annihiler les risques d'erreurs. Le technicien peut en effet se fier à des repères visuels lors de l'installation, lui indiquant jusqu'où serrer le collier de serrage pour que le joint soit comprimé de manière optimale pour ne pas créer de fuites en fonction du diamètre et de la pression de service. En variante, ces repères peuvent être associés ou remplacés par un dispositif de mesure de la tension de réglage du collier de serrage.

Pour ces deux modes de réalisation, les ouvertures sont de préférence ménagées symétriquement par rapport à un axe central du socle. Ce système permet ainsi de réduire les risques de mauvais positionnement de du dispositif de prise en charge contre l'ouverture de la canalisation.

En outre, dans un mode de réalisation préférentiel, les moyens de réglage sont solidaires d'une extrémité de l'élément longiligne. En effet, ce mode de réalisation permet d'effectuer le serrage du dispositif de prise en charge sur la canalisation en effectuant un simple mouvement de tirage de l'extrémité libre de l'élément longiligne.

Un collier de serrage présentant les caractéristiques précédentes permet avantageusement de simplifier et de réduire le temps nécessaire au montage du dispositif de prise en charge sur la canalisation.

Cependant le système de blocage de l'élément longiligne pourrait être différent sans que cela nuise au bon fonctionnement de l'invention.

Selon un autre aspect, l'invention concerne une installation incluant :
- au moins une canalisation présentant au moins une ouverture, et
- au moins un dispositif de prise en charge tel que décrit précédemment.

De préférence, la canalisation est une canalisation peinte ou pré-peinte sur ses faces interne et externe, c'est-à-dire que la canalisation comporte une peinture recouvrant ses faces interne et externe. La peinture permet de protéger la canalisation des dégradations, notamment celles causées par la rouille.

La peinture appliquée doit permettre de faire des perçages et des découpes sans s'écailler, réduisant ainsi considérablement les temps de fabrication en atelier. En effet, la phase de mise en peinture après fabrication usuellement réalisée dans les procédés connus est supprimée.

De préférence, la peinture de la canalisation comprend un liant polymère époxyde, particulièrement résistant lors du perçage et des découpes.

Typiquement, l'installation peut être une installation de protection incendie dans laquelle il est recherché de mesurer une valeur, comme par exemple une valeur de pression à l'aide d'un manomètre.

### BREVE DESCRIPTION DES FIGURES

Les figures 1-3 ne sont pas couvertes par les revendications. Les figures 4a-4d représentent le mode principal conforme à l'invention. Les figures restantes concernent des modes particuliers de réalisation de l'invention.
[Fig.1] La figure 1 est une vue en perspective du dispositif de dérivation monté sur une canalisation et du collier de serrage selon un mode de réalisation qui ne fait pas partie de l'invention,
[Fig.2] La figure 2 est une vue en perspective de la boucle du collier de serrage de la figure 1,
[Fig.3] La figure 3 est une vue en coupe des moyens de réglage de la longueur du collier de serrage de la figure 1.
[Fig.4a] La figure 4a est une vue en coupe d'une première étape d'installation des moyens de réglage de la longueur du collier de serrage selon un deuxième mode de réalisation,
[Fig.4b] La figure 4b est une vue en coupe d'une deuxième étape d'installation des moyens de réglage de la longueur du collier de serrage selon un deuxième mode de réalisation,
[Fig.4c] La figure 4c est une vue en coupe d'une troisième étape d'installation des moyens de réglage de la longueur du collier de serrage selon un deuxième mode de réalisation, et
[Fig.4d] La figure 4d est une vue en coupe d'une troisième étape d'installation des moyens de réglage de la longueur du collier de serrage selon un troisième mode de réalisation.
[Fig.5] La figure 5 est une vue en perspective plongée du socle d'un dispositif de prise en charge selon un troisième mode de réalisation de l'invention,
[Fig.6] La figure 6 est une vue de face du socle du dispositif de prise en charge de la figure 5,
[Fig.7] La figure 7 est une vue en perspective contre plongée du socle du dispositif de prise en charge de la figure 5,
[Fig.8] La figure 8 est une vue en perspective d'un dispositif de prise en charge selon un quatrième mode de réalisation de l'invention,
[Fig.9] La figure 9 est une vue de face du dispositif de prise en charge de la figure 8,
[Fig.10] La figure 10 est une vue de côté du dispositif de prise en charge de la figure 8,
[Fig.11] La figure 11 est une vue en perspective d'un dispositif de prise en charge selon un cinquième mode de réalisation de l'invention,
[Fig.12] La figure 12 est une vue de face du dispositif de prise en charge de la figure 11,
[Fig.13] La figure 13 est une vue de côté du dispositif de prise en charge de la figure 11,
[Fig.14] La figure 14 est une vue en perspective d'un dispositif de prise en charge selon un sixième mode de réalisation de l'invention,
[Fig.15] La figure 15 est une vue de face du dispositif de prise en charge de la figure 14,
[Fig.16] La figure 16 est une vue de côté du dispositif de prise en charge de la figure 14,
[Fig.17] La figure 17 est une vue en perspective d'un dispositif de prise en charge selon un septième mode de réalisation de l'invention,
[Fig.18] La figure 18 est une vue de face du dispositif de prise en charge de la figure 17, et
[Fig.19] La figure 19 est une vue de côté du dispositif de prise en charge de la figure 17.

### DESCRIPTION DES MODES DE REALISATION

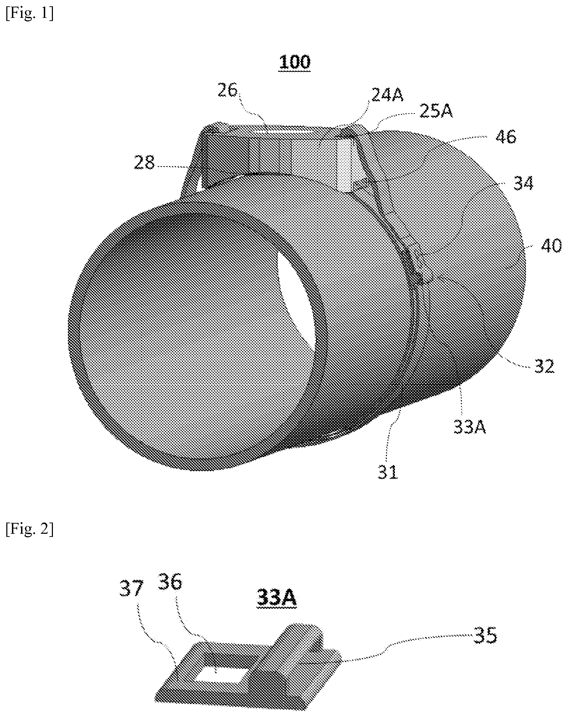

Tel qu'illustré sur la figure 1, un dispositif de dérivation **100, 200, 300, 400, 500, 600, 700** est monté sur une installation comportant au moins une canalisation **40.**

La canalisation **40** est configurée pour contenir un fluide tel que de l'eau ou du gaz. Pour ce faire, la canalisation **40** est de préférence réalisée en acier, inox, en cuivre ou en polychlorure de vinyle surchloré. Dans certains modes de réalisation, la canalisation **40** peut être configurée pour supporter des pressions de l'ordre d'une dizaine de bars, par exemple comprise entre 5 et 20 bars et préférentiellement entre 8 et 12 bars.

En outre, le diamètre de la canalisation **40** peut varier, typiquement entre 20 et 600 mm, également appelé selon l'acronyme « DN 20 » ou « DN 600 ».

Afin d'intégrer les dispositifs de dérivation **100, 200, 300, 400, 500, 600, 700** de l'invention, une ou plusieurs ouvertures sont ménagées dans les canalisations **40.** Les ouvertures sont par exemple circulaires, d'un diamètre compris entre 10 et 500 mm, également appelé selon l'acronyme « DN 10 » ou « DN 500 ». Le diamètre de l'ouverture est dimensionné en fonction du diamètre de la canalisation et du dispositif à intégrer.

Tel qu'illustré sur la figure 1, le dispositif **100, 200, 300, 400, 500, 600, 700** comporte un socle **24A-24G** monobloc présentant une forme sensiblement parallélépipédique plane d'une épaisseur comprise entre 0,5 et 1,5 cm. En variante, la face inférieure du socle **24A-24G** peut présenter une légère courbure, tel qu'illustré sur la figure 1. La courbure de la face inférieure est choisie pour s'adapter à la courbure de la canalisation **40** de plus grand diamètre sur laquelle peut s'adapter le dispositif **100, 200, 300, 400, 500, 600, 700.** Le socle **24A-24G** peut être directement obtenu par un procédé de moulage, un procédé par soustraction de matière, tel que l'usinage ou la découpe laser, ou encore par un procédé additif, tel que l'impression 3D.

Le socle **24A-24G** présente en outre une ouverture traversante **26** d'un diamètre compris entre 10 et 500 mm.

Avantageusement un joint **28** est positionné en regard de la face inférieure du socle **24A-24G,** typiquement entre le socle **24A-24G** et la canalisation **40,** de sorte à entourer les ouvertures respectivement du socle **24A-24G** et de la canalisation **40.** A titre d'exemple, le joint **28** est un joint torique en caoutchouc d'une épaisseur comprise entre 0,2 et 0,7 cm. En variante, pour les canalisations de plus grand diamètre, le joint peut comporter des lèvres et présenter une épaisseur comprise entre 0.5 et 3 cm.

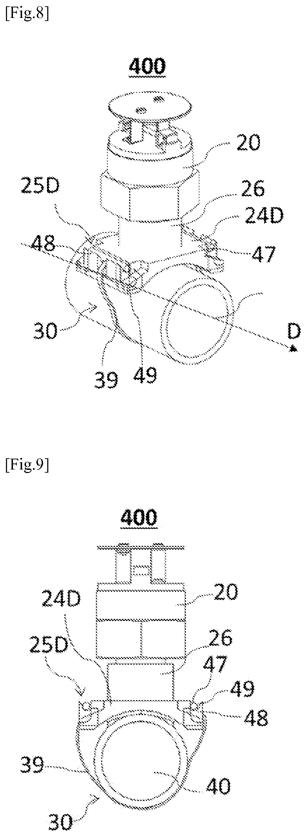

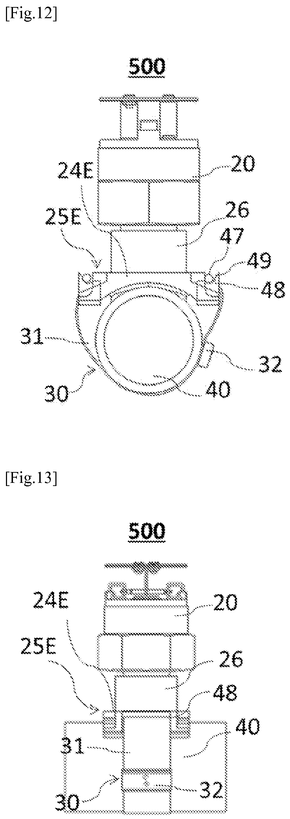

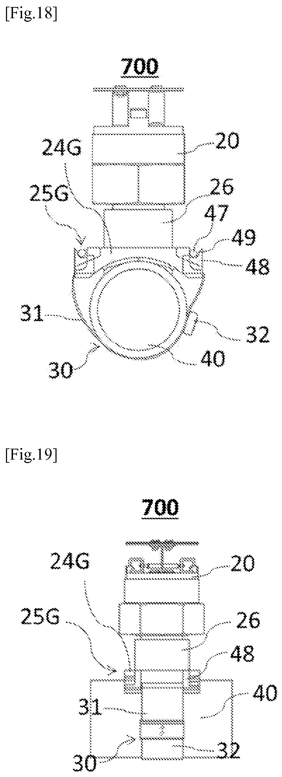

Un dispositif comme par exemple une canalisation de dérivation, une buse de protection incendie ou encore un manomètre, tel qu'illustré sur les figures 8 à 19, peut être rapporté sur le socle **24A-24G** en alignant le dispositif avec l'ouverture traversante **26** du socle **24A-24G.** Par exemple, le dispositif peut présenter une portion mâle présentant un filetage et coopérant avec un second filetage, ménagé dans les parois de l'ouverture traversante **26** du socle **24A-24G.** Le dispositif peut ainsi être vissé sur le socle **24A-24G.**

Le ou les collier(s) de serrage **30** permettent de fixer et maintenir le dispositif sur la canalisation **40.**

Le ou les collier(s) de serrage **30** comprennent un élément longiligne, comme par exemple une bande d'une largeur comprise entre 0,5 et 2 cm ou encore un câble de diamètre compris entre 0.2 et 1 cm. En variante, l'élément longiligne peut être un élément de serrage de type « serflex », réalisé dans un matériau métallique. Les colliers de serrage **30** comportent également des moyens de réglage **32** de la longueur et du serrage du collier de serrage **30.** Le socle **24A-24G** peut être munit d'un ou de plusieurs colliers de serrages **30** en fonction des besoins de l'installation et du diamètre de la canalisation **40.**

Les moyens de réglage **32** sont indépendants du socle **24A-24G.**

Par exemple, les moyens de réglage **32** peuvent également être indépendant de l'élément longiligne **31.** Ils peuvent être constitués d'une ou plusieurs pièces rapportées qui peuvent se fixer ou s'emboiter sur l'élément longiligne **31** afin de la maintenir en place.

Tel qu'illustré sur les figures 1 à 3, le collier de serrage **30** peut se présenter sous la forme d'un feuillard métallique **31** et les moyens de réglage peuvent inclure une boucle **33A,** indépendante du feuillard **31,** comportant un logement **35** dans lequel les extrémités du feuillard **31** sont insérées.

Des vis autoforeuses **34** permettent de transpercer les différentes épaisseurs de feuillard **31.** Avantageusement, la boucle **33A** présente une ouverture **36** permettant d'accueillir la portion inférieure du corps de la vis **34.**

Ainsi, l'élément longiligne peut être directement adapté au diamètre et à la tolérance d'une canalisation **40** en créant l'ouverture nécessaire pour que le joint **28** soit comprimé avec un taux de compression optimal et que la liaison entre la canalisation et le dispositif de prise en charge soit rendue la plus étanche possible. Le réglage est réalisé « sur mesure » et les possibilités de réglage sont quasiment continues.

En variante, dans un mode de réalisation non représenté sur les figures, l'élément longiligne peut être un feuillard métallique comportant des ouvertures ménagées régulièrement et de manière rapprochée le long de l'élément longiligne. Afin que l'élément longiligne puisse être directement adapté au diamètre et à la tolérance d'une canalisation, le pas entre les ouvertures est de préférence inférieur ou égal à la tolérance du constructeur. Typiquement, si la canalisation présente un diamètre de 25mm et que la tolérance est de +/- 1mm, le pas entre les ouvertures est inférieur ou égal à la 1mm. Ainsi, le joint peut être comprimé avec un taux de compression optimal, et la liaison entre la canalisation et le dispositif de prise en charge est redue la plus étanche possible.

Afin de fixer le socle **24A** sur la canalisation **40,** celui-ci est positionnée sur l'ouverture de la canalisation **40.** Les deux extrémités du feuillard **31** sont insérées, selon un mouvement de bas en haut, à travers les points d'ancrages, matérialisés par des ouvertures latérales **25A** de sorte que le feuillard **31** entoure la canalisation **40.** Les extrémités du feuillard **31** sont ensuite tirées depuis le dessus du socle **24A** et rabattues par-dessus les extrémités du socle **24A** pour serrer le collier de serrage **30** autour de la canalisation **40.** Les extrémités du feuillard **31** sont ensuite ramenées ensemble, formant ainsi une boucle autour de chaque bord du socle **24A.** Les extrémités du feuillard **31** sont ensuite fixées ensemble par les moyens de réglage **32.**

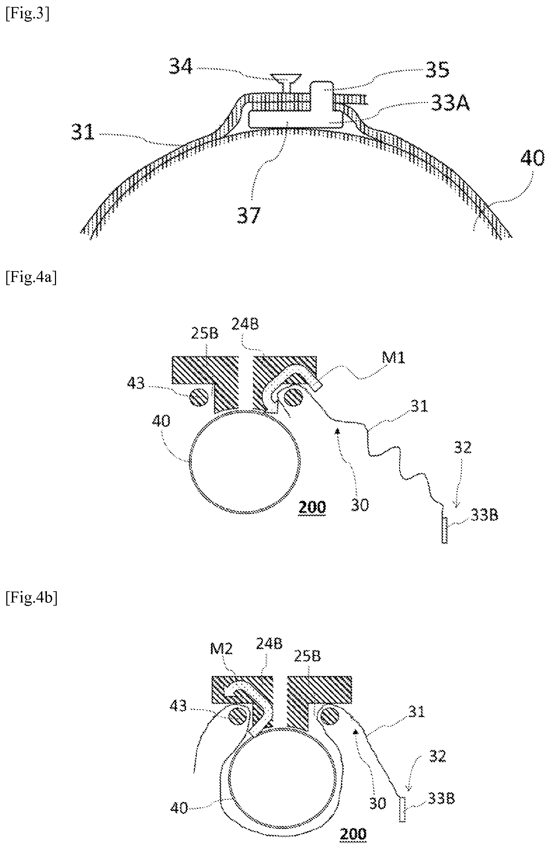

Ainsi, tel qu'illustré sur la figure 3, la boucle **33A** est positionnée sur une première épaisseur de feuillard **31.** Les extrémités du feuillard **31** sont ensuite rabattues et insérées dans le logement **35** de la boucle **33A,** puis serrées de sorte à maintenir efficacement le socle **24A** sur la canalisation **40.** Pour ce faire, les extrémités du feuillard **31** dépassent de chaque côté du logement **35** sur une longueur d'au moins 1cm. Les extrémités du feuillard **31** se superposent ainsi au niveau du corps **37** de la boucle **33A.** La vis **34** est enfin insérée au niveau de cette superposition et transperce les deux épaisseurs formées par les extrémités du feuillard **31.**

En variante, tel qu'illustré sur les figures 4a à 4d, les moyens de réglage **32** sont solidaires d'une extrémité de l'élément longiligne. Ainsi, le collier de serrage **30** peut se présenter sous la forme d'un feuillard métallique **31** et les moyens de réglage peuvent inclure une boucle **33B** comportant un logement **35,** fixé à l'extrémité du feuillard **31.**

Le logement **35** peut prendre la forme d'un tube de section parallélépipédique, destiné à permettre le passage d'une partie du feuillard métallique **31.** En outre, des moyens de fixation, qui selon une première variante de l'invention sont une vis autoforeuse **34,** sont placés sur le logement **35,** perpendiculairement à la longueur du tube et au sens de déplacement du feuillard **31** dans le tube, de sorte à brider les déplacements du feuillard **31** lorsqu'il est comprimé autour de la canalisation **40** et inséré dans le tube.

Selon une deuxième variante de l'invention non représentée, les moyens de fixation incluent une bille contenue dans le tube et destinée à bloquer les déplacements de l'élément longiligne. Pour ce faire, le tube présente une section variable. Typiquement, la section du tube se rétrécie depuis des dimensions supérieures au diamètre de la bille jusqu'à des dimensions sensiblement égales au diamètre de la bille. Ainsi, lors du coulissement de l'élément longiligne dans le tube, la bille est entrainée dans une direction opposée à la direction d'insertion de l'élément longiligne, vers la partie du tube de dimensions réduites, où elle se retrouve bloquée. La bille bloque ainsi également les déplacements de l'élément longiligne.

Les espaces **25B** du socle **24B** sont utilisés pour créer des points de fixation du feuillard **31.** Pour ce faire, tel qu'illustré sur la figure 4a, l'extrémité du feuillard **31** non pourvue de la boucle **33B** est insérée selon un premier mouvement **M1** pour entourer un premier point de fixation du socle **24B.** Ce mouvement **M1** est réalisé en insérant le feuillard **31** dans l'espace **25B** depuis la face supérieure du socle **24B** jusqu'à la face inférieure du socle **24B** jusqu'à ce que le feuillard **31** arrive le long de la canalisation **40.**

Le feuillard **31** est alors déplacé autour de la canalisation **40** jusqu'au deuxième point de fixation du socle **24B.** Tel qu'illustré sur la figure 4b, le feuillard **31** est alors introduit dans l'espace **25B** suivant le mouvement **M2** pour entourer le deuxième point de fixation du socle **24B.** Ce mouvement **M2** est réalisé en insérant le feuillard **31** dans l'espace **25B** depuis la face inférieure du socle **24B** jusqu'à la face supérieure du socle **24B** jusqu'à ce que le feuillard **31** arrive le long de la canalisation **40.**

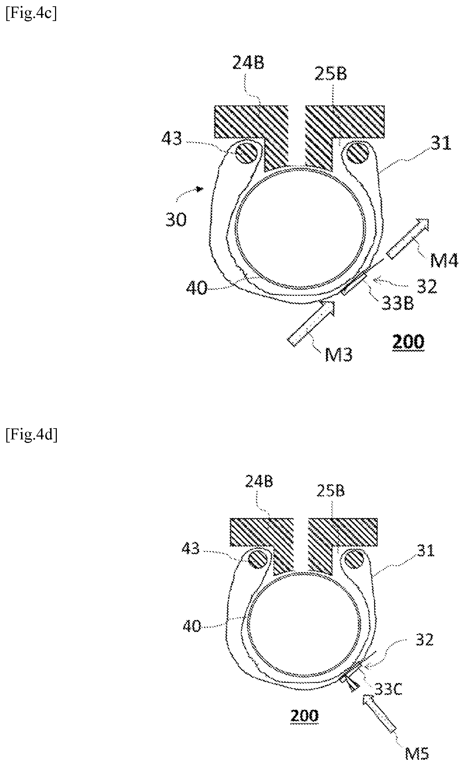

Le feuillard **31** est alors introduit dans la boucle **33B** suivant le mouvement **M3,** illustré sur la figure 4c. Le collier de serrage **30** est ensuite comprimé autour de la canalisation **40** en tirant sur l'extrémité du feuillard **33** après son passage dans le logement de la boucle **33B,** selon le mouvement **M4.**

Dans certains modes de réalisation, lorsque la tension recherchée de compression du feuillard **31** est obtenue, des moyens de fixation du feuillard **31** dans le logement peuvent être insérés dans la boucle **33C** au moyen d'une action selon une direction **M5,** perpendiculaire à la longueur du logement **35,** tel qu'illustré sur la figure 4d. Par la suite, l'extrémité restante du feuillard **31** dépassant de la boucle **33C** peut éventuellement être sectionnée.

En outre, l'élément longiligne **31** peut également présenter des encoches ou des rainures permettant d'accueillir ou de bloquer les moyens de réglage **32.**

Avantageusement, le collier de serrage **30** présente également des repères permettant d'adapter le serrage à la pression régnant dans la canalisation **40.** De même, le dispositif de prise en charge **100, 200, 300, 400, 500, 600, 700** peut également inclure un dispositif intégré de mesure de la tension du feuillard **31.** De même, un dispositif externe peut également être utilisé pour vérifier la tension de serrage.

Il existe plusieurs modes de réalisation permettant d'attacher le collier de serrage **30** au socle **24A-24G.**

Tel qu'illustré sur la figure 1, dans un premier mode de réalisation, le socle **24A** présente une forme parallélépipédique avec par exemple des taraudages au niveau des coins. Le socle **24A** présente une longueur comprise entre 2 et 10 cm et une largeur comprise entre 2 et 5 cm. La longueur du socle **24A** est destinée à être positionnée dans une direction perpendiculaire à la direction principale **D** de la canalisation **40.**

Le socle **24A** présente en ses extrémités deux rainures latérales **25A** ménagées dans l'épaisseur du socle **24A,** de forme sensiblement parallélépipédiques et destinées à permettre le passage de la bande **31** du collier de serrage **30.**

Un alésage **46** peut également être ménagé sur la portion inférieure des rainures **25A** permettant à la rainure **25A** de déboucher sur l'extérieur. Cet alésage **46** permet à la bande **31** de mieux s'adapter à la forme de la canalisation **40.**

En variante, tel qu'illustré sur les figures 4a à 4d, le socle **24B** peut présenter deux renfoncements au niveau de ses extrémités, permettant de créer l'ouverture **25B.** L'extrémité des renfoncements peut comporter deux axes **43.** Ainsi, la bande **31** du collier de serrage **30** peut traverser les ouvertures **25B** et former une boucle autour des axes **43.**

Selon un autre exemple, le socle **24B** peut présenter des moyens de fixation de deux axes **43** rapportés de part et d'autre du socle **24B.** Les axes **43** sont positionnés de sorte à laisser un espace **25** libre entre les bords du socle **24B** et les axes **43.** Cet espace **25B** est destiné à permettre le passage de la bande **31** du collier de serrage **30,** celle-ci pouvant alors former une boucle autour des axes **43.**

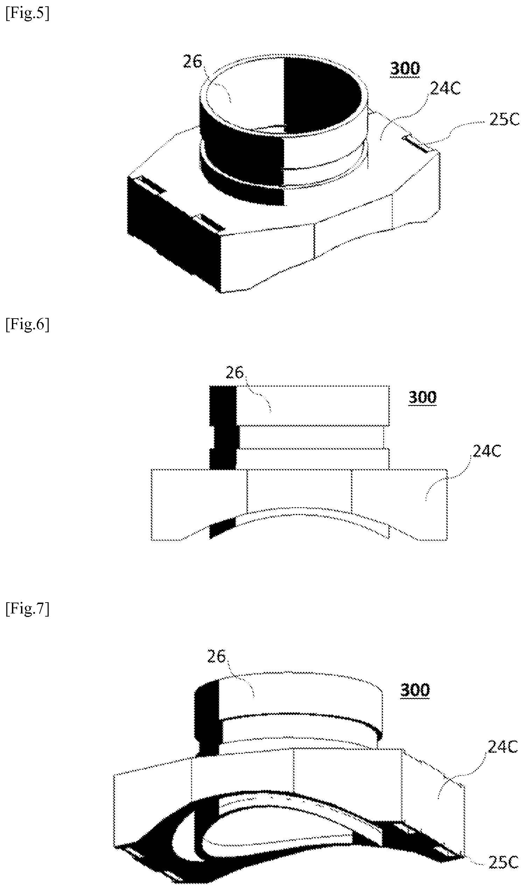

Tel qu'illustré sur les figures 5 à 7, dans un troisième mode de réalisation, le socle **24C** présente une forme sensiblement hexagonale de longueur comprise entre 2 et 8 cm et de largeur comprise entre 2 et 5 cm. La longueur du socle **24C** est destinée à être orientée dans une direction perpendiculaire à la direction principale **D** de la canalisation **40.**

Le socle **24C** présente en outre deux paires de rainures latérales **25C** ménagées de part et d'autre du socle **24C** dans l'épaisseur du socle **24C,** de forme sensiblement parallélépipédiques et destinées à permettre le passage de deux colliers de serrage **30.** De préférence, les rainures sont espacées de 1 à 3 cm. Ce type de socle **24C** est utilisé pour des canalisations **40** de plus grand diamètre, typiquement supérieur à DN50.

Le montage des colliers des deux serrage **30** s'effectue de la même manière que décrit aux figures 4a-4d, les colliers de serrage **30** pouvant être montés simultanément ou l'un après l'autre.

Tel qu'illustré sur les figures 8 à 10, dans un quatrième mode de réalisation, le socle **24D** comporte deux points d'ancrage **25D,** de part et d'autre du socle **24D.** Chaque point d'ancrage **25D** comprend un logement **49** présentant une profondeur comprise entre 0.5 et 1 cm et dimensionné par accueillir un axe **47** d'une longueur comprise entre 1 et 3 cm et d'un diamètre compris entre 0.1 et 1 cm. Dans ce quatrième mode de réalisation, le logement **49** s'étend sur toute la largeur du socle **24D.** Le logement **49** est bordé par deux ergots **48.** De préférence, la portion supérieure des ergots **48** peut être arrondie ou encore taillée en biseau pour permettre de guider le mouvement de l'axe **47** vers le logement **49.** Les deux ergots **48** sont séparés d'une fente, dimensionnée pour permettre le passage du câble **39,** mais pour empêcher le passage de l'axe **47,** celui-ci restant ainsi bloqué dans le logement **49,** retenu par les ergots **48.**

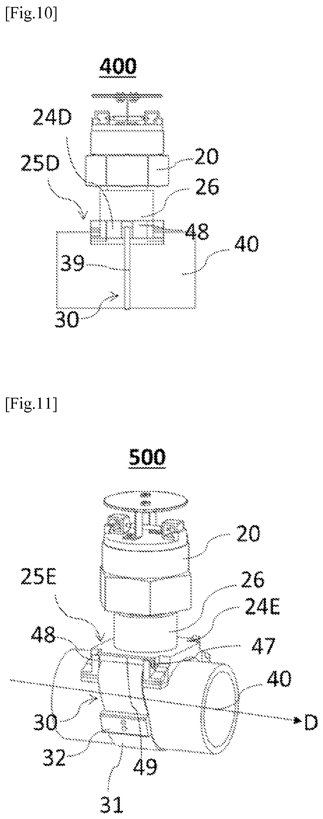

Tel qu'illustré sur les figures 11 à 13, dans le cinquième mode de réalisation, le logement **49** des points d'ancrage **25E** peut présenter une profondeur plus faible sans pour autant entrainer l'extraction de l'axe **47.** La largeur de la fente peut en outre être adaptée à la largeur de l'élément longiligne. Dans ce cinquième mode de réalisation, la fente est dimensionnée pour permettre le passage d'un feuillard **31.**

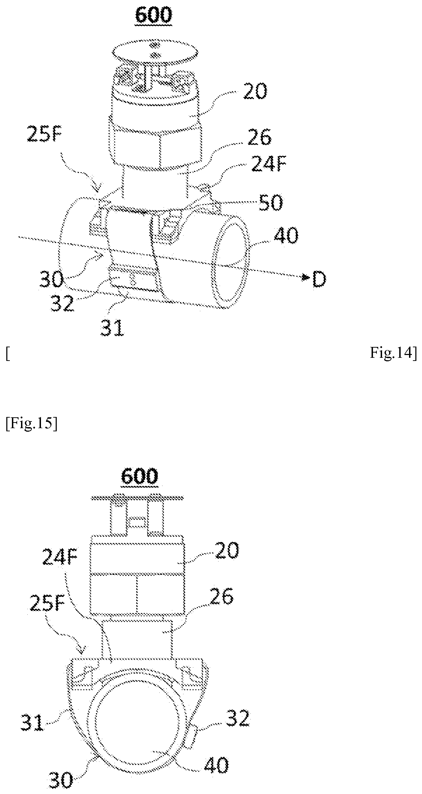

Tel qu'illustré sur les figures 14 à 16, dans un sixième mode de réalisation, le socle **24F** présente des points d'ancrage **25F** comprenant un ergot **50** destiné à coopérer avec un trou ménagé aux extrémités de l'élément longiligne **31.** Afin de monter l'élément longiligne sur le socle **24F,** les trous de l'élément longiligne **31** sont insérés sur les ergots **50** de sorte à également entourer la canalisation **50,** puis le collier de serrage **30** est adapté au diamètre de la canalisation via les moyens de réglage **32.**

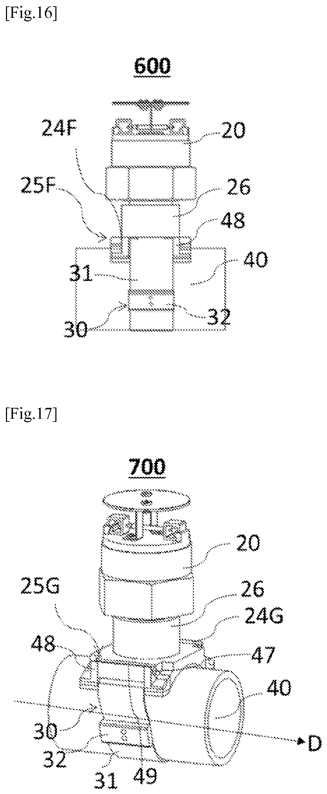

Tel qu'illustré sur les figures 17 à 19, dans un septième mode de réalisation, le socle **24G** présente un logement **49** bordé par deux ergots **48** séparés d'une fente, dimensionnée pour permettre le passage de la largeur de l'élément longiligne **31.** La fente est recouverte d'une plaque reliant les deux ergots **48,** créant ainsi un espace d'une épaisseur comprise entre 0.05 et 0.2 cm, ne permettant pas le passage de l'axe **47,** mais seulement celui de l'élément longiligne **31.** Ainsi, afin d'insérer l'élément longiligne **31,** l'axe **49** doit d'abord être retiré, puis la portion terminale de l'élément longiligne **31** est insérée dans la fente recouverte de la plaque. L'axe **47** est ensuite fixé à l'extrémité de l'élément longiligne **31,** par exemple en le glissant dans une boucle créée à l'extrémité de l'élément longiligne **31.** Enfin, l'axe **47** est inséré dans le logement **49.** L'axe **47** ne peut ainsi pas s'extraire du logement **49** car il est bloqué par la présence de la plaque.

Pour conclure, l'invention permet d'obtenir un dispositif de dérivation adaptable à plusieurs diamètres de conduites et dont la mise en œuvre est plus facile et moins couteuse que les dispositifs de l'art antérieur.

## Revendications

1. Dispositif (100, 200, 300, 400, 500, 600, 700) de prise en charge destiné à être monté sur une ouverture d'une canalisation (40), ledit dispositif (100, 200, 300, 400, 500, 600, 700) comportant :
- un socle (24A-24G) présentant un trou traversant (26), et
- un joint (28) destiné à assurer l'étanchéité de la connexion entre l'ouverture de ladite canalisation (40) et le trou traversant (26) dudit socle (24A-24G),
tel
- le socle (24A-24G) monobloc comporte en outre au moins deux points d'ancrage (25A-25G), et
- le dispositif (100, 200, 300, 400, 500, 600, 700) comporte au moins un collier de serrage (30) comprenant :
• un élément longiligne (31, 39) réalisé dans un matériau souple destiné à entourer partiellement la canalisation (40), ledit élément longiligne (31, 39) coopérant avec le socle (24A-24G) au niveau desdits points d'ancrage (25A-25G),
• des moyens de réglage (32), indépendants du socle (24A-24G), permettant d'adapter la longueur de l'au moins un collier de serrage (30) de sorte que le dispositif (100, 200, 300, 400, 500, 600, 700) est apte à être monté sur des canalisations (40) de diamètres différents ; lesdits moyens de réglage (32) comprenant une boucle **(33B)** solidaire d'une extrémité de l'élément longiligne **(31,39),** ladite boucle **(33B)** comportant un logement (35) dans lequel une autre extrémité de l'élément longiligne (31, 39) est insérée, ladite autre extrémité étant déplacée par un mouvement (M4) comprimant l'élément longiligne (31, 39) contre la canalisation, afin d' obtenir une tension recherchée de compression de l'élément longiligne (31, 39) ; et
• des moyens de fixation, de type vis autoforeuse **(34)** et/ou bille contenue dans un tube à section variable, insérés dans la boucle **(33B)** selon une direction **(M5)** perpendiculaire à la longueur du logement **(35),** lesdits moyens de fixation étant placés de sorte à brider les déplacements de l'élément longiligne **(31, 39)** et à maintenir ladite tension recherchée de compression de l'élément longiligne **(31,39)** autour de la canalisation **(40),** cette tension permettant au dispositif **(100, 200, 300, 400, 500, 600, 700)** de supporter des pressions comprises entre 5 et 20 bars et, plus précisément, entre 8 et 12 bars .

2. Dispositif selon la revendication 1, ***caractérisé en ce que*** le dispositif comporte un unique collier de serrage (30) et uniquement deux points d'ancrage (25A-25G) disposés de part et d'autre du socle (24A-24G).

3. Dispositif selon la revendication 1 ou 2, ***caractérisé en ce que*** les points d'ancrage (25A-25C) sont des ouvertures traversantes orientées selon une direction parallèle à la direction principale (D) de la canalisation (40), l'élément longiligne (31, 39) étant monté sur le socle (24A-24C) en insérant au moins une extrémité de l'élément longiligne (31, 39) dans les ouvertures traversantes et en formant une boucle autour des bordures dudit socle (24A-24C).

4. Dispositif selon la revendication 3, ***caractérisé en ce que*** les ouvertures traversantes sont des fentes ménagées dans le socle (24A, 24C).

5. Dispositif selon la revendication 3, ***caractérisé en ce que*** les ouvertures traversantes correspondent à l'espace formé entre le socle (24B) et un axe du socle (24B).

6. Dispositif selon la revendication 2, ***caractérisé en ce que*** les deux extrémités de l'élément longiligne (31, 39) sont configurées pour coopérer avec les points d'ancrage (25D-25G) disposés de part et d'autre du socle (24D-24G), de sorte que l'élément longiligne (31, 39) enserre partiellement la canalisation (40) après action sur les moyens de réglage (32).

7. Dispositif selon la revendication 6, ***caractérisé en ce que*** chaque point d'ancrage (25H-25K) comporte un logement (49) délimité par deux ergots (48), séparés d'une fente dimensionnée pour permettre le passage de l'élément longiligne (31, 39), le logement (49) étant destiné à recevoir un axe (47) fixé à une extrémité de l'élément longiligne (31, 39), les ergots (48, 50) étant destinés à permettre l'insertion des axes (47) dans les logements (49) avant action sur les moyens de réglage (32) et à bloquer l'extraction desdits axes (47) après action sur les moyens de réglage (32).

8. Dispositif selon la revendication 6, ***caractérisé en ce que*** chaque point d'ancrage (25H-25K) comprend un ergot (50) destiné à coopérer avec un trou ménagé aux extrémités de l'élément longiligne (31, 39).

9. Dispositif selon l'une des revendications 1 à 8, ***caractérisé en ce que*** l'élément longiligne (31) est un feuillard.

10. Dispositif selon l'une des revendications 1 à 8, ***caractérisé en ce que*** l'élément longiligne (31) est un câble.

11. Dispositif selon l'une des revendications 1 à 8, ***caractérisé en ce que*** l'élément longiligne (31) est réalisé dans un matériau métallique.

12. Dispositif selon l'une des revendications 1 à 11, ***caractérisé en ce que*** les moyens de réglage (32) de la longueur de l'au moins un collier de serrage (30) comportent des repères permettant de comprimer le joint (28) à un taux prédéterminé.

13. Dispositif selon l'une des revendications 1 à 12, ***caractérisé en ce que*** les moyens de réglage (32) sont solidaires d'une extrémité de l'élément longiligne (31).

14. Installation incluant :
- au moins une canalisation (40) présentant au moins une ouverture (42), et
- au moins un dispositif de prise en charge (100, 200, 300, 400, 500, 600, 700) selon l'une des revendications 1 à 13.

15. Installation selon la revendication 14, ***caractérisée en ce que*** la canalisation (40) est une canalisation peinte ou pré-peinte sur ses faces interne et externe.

16. Installation selon la revendication 15, ***caractérisée en ce que*** la peinture de la canalisation (40) comprend un liant polymère époxyde.

17. Installation selon l'une des revendications 14 à 16, ***caractérisée en ce que*** l'installation est une installation de protection incendie.

## Patentansprüche

1. Vorrichtung (100, 200, 300, 400, 500, 600, 700) zur Behandlung, die dazu bestimmt ist, an einer Öffnung einer Leitung (40) angebracht zu werden, wobei die Vorrichtung (100, 200, 300, 400, 500, 600, 700) Folgendes aufweist:
- einen Sockel (24A-24G), der ein Durchgangsloch (26) aufweist, und
- eine Dichtung (28), die dazu bestimmt ist, die Verbindung zwischen der Öffnung der Leitung (40) und dem Durchgangsloch (26) des Sockels (24A-24G) abzudichten,
***derart, dass:***
- der einstückige Sockel (24A-24G) darüber hinaus mindestens zwei Verankerungspunkte (25A-25G) aufweist, und
- die Vorrichtung (100, 200, 300, 400, 500, 600, 700) mindestens eine Rohrschelle (30) aufweist, die Folgendes umfasst:
• ein längliches Element (31, 39), das aus einem nachgiebigen Material hergestellt ist, wobei es dazu bestimmt ist, die Leitung (40) abschnittsweise zu umgeben, wobei das längliche Element (31, 39) mit dem Sockel (24A-24G) auf Höhe der Verankerungspunkte (25A-25G) zusammenwirkt,
• Einstellmittel (32), die unabhängig vom Sockel (24A-24G) sind, wobei sie es ermöglichen, die Länge der mindestens einen Rohrschelle (30) derart anzupassen, dass die Vorrichtung (100, 200, 300, 400, 500, 600, 700) dafür eignet ist, an Leitungen (40) mit verschiedenen Durchmessern angebracht zu werden; wobei die Einstellmittel (32) eine Schlaufe **(33B)** umfassen, die fest mit einem Ende des länglichen Elements **(31, 39)** verbunden ist, wobei die Schlaufe **(33B)** eine Aussparung (35) aufweist, in welche das andere Ende des länglichen Elements (31, 39) eingefügt wird, wobei das andere Ende durch eine Bewegung (M4) verschoben wird, welche das längliche Element (31, 39) gegen die Leitung zusammendrückt, um eine angestrebte Druckspannung des länglichen Elements (31, 39) zu erzielen; und
• Befestigungsmittel, vom Typ selbstbohrende Schraube **(34)** und/oder Kugel in einem Rohr mit variablem Durchmesser, wobei diese gemäß einer Richtung **(M5)** in die Schlaufe **(33B)** eingeführt werden, die rechtwinklig zur Längserstreckung der Aussparung **(35)** ist, wobei die Befestigungsmittel derart angeordnet sind, dass sie die Verschiebungen des länglichen Elements **(31, 39)** beschränken und die angestrebte Druckspannung des länglichen Elements **(31, 39)** rundum die Leitung **(40)** aufrecht zu erhalten, wobei es diese Spannung der Vorrichtung **(100, 200, 300, 400, 500, 600, 700)** ermöglicht, Drücke im Bereich von 5 bis 20 bar und, genauer gesagt, von 8 bis 12 bar zu ertragen.

2. Vorrichtung nach Anspruch 1, ***dadurch gekennzeichnet, dass*** die Vorrichtung eine einzige Rohrschelle (30) und nur zwei Verankerungspunkte (25A-25G) aufweist, welche beiderseits des Sockels (24A-24G) angeordnet sind.

3. Vorrichtung nach Anspruch 1 oder 2, ***dadurch gekennzeichnet, dass*** es sich bei den Verankerungspunkten (25A-25C) um Durchgangsöffnungen handelt, die gemäß einer Richtung ausgerichtet sind, die parallel zur Hauptrichtung (D) der Leitung (40) ist, wobei das längliche Element (31, 39) am Sockel (24A-24C) angebracht wird, indem mindestens ein Ende des länglichen Elements (31, 39) in die Durchgangsöffnungen eingefügt wird und indem eine Schlaufe rundum die Ränder des Sockels (24A-24C) gebildet wird.

4. Vorrichtung nach Anspruch 3, ***dadurch gekennzeichnet, dass*** es sich bei den Durchgangsöffnungen um Schlitze handelt, die im Sockel (24A, 24C) ausgespart sind.

5. Vorrichtung nach Anspruch 3, ***dadurch gekennzeichnet, dass*** die Durchgangsöffnungen dem Raum entsprechen, welcher zwischen dem Sockel (24B) und der Achse des Sockels (24B) gebildet ist.

6. Vorrichtung nach Anspruch 2, ***dadurch gekennzeichnet, dass*** die beiden Enden des länglichen Elements (31, 39) dafür ausgelegt sind, mit den Verankerungspunkten (25D-25G), welche beiderseits des Sockels (24D-24G) angeordnet sind, derart zusammenzuwirken, dass das längliche Element (31, 39) die Leitung (40) nach Einwirkung auf die Einstellmittel (32) abschnittsweise umschließt.

7. Vorrichtung nach Anspruch 6, ***dadurch gekennzeichnet, dass*** jeder der Verankerungspunkte (25H-25K) eine Aussparung (49) aufweist, die von zwei Ansätzen (48) begrenzt wird, welche durch einen Schlitz voneinander getrennt sind, der dafür bemessen ist, dass das längliche Element (31, 39) hindurch gelangen kann, wobei die Aussparung (49) dafür bestimmt ist, eine Achse (47) aufzunehmen, die an einem Ende des länglichen Elements (31, 39) befestigt ist, wobei die Ansätze (48, 50) dafür bestimmt sind, das Einfügen der Achsen (47) in die Aussparungen (49) vor der Einwirkung auf die Einstellmittel (32) zu ermöglichen und die Entnahme der Achsen (47) nach der Einwirkung auf die Einstellmittel (32) zu blockieren.

8. Vorrichtung nach Anspruch 6, ***dadurch gekennzeichnet, dass*** jeder der Verankerungspunkte (25H-25K) einen Ansatz (50) umfasst, der dazu bestimmt ist, mit einem Loch zusammenzuwirken, das an den Enden des länglichen Elements (31, 39) ausgespart ist.

9. Vorrichtung nach einem der Ansprüche 1 bis 8, ***dadurch gekennzeichnet, dass*** es sich bei dem länglichen Element (31) um ein Band handelt.

10. Vorrichtung nach einem der Ansprüche 1 bis 8, ***dadurch gekennzeichnet, dass*** es sich bei dem länglichen Element (31) um ein Seil handelt.

11. Vorrichtung nach einem der Ansprüche 1 bis 8, ***dadurch gekennzeichnet, dass*** das längliche Element (31) aus einem metallischen Material hergestellt ist.

12. Vorrichtung nach einem der Ansprüche 1 bis 11, ***dadurch gekennzeichnet, dass*** die Mittel (32) zur Einstellung der Länge der mindestens einen Rohrschelle (30) Markierungen aufweisen, die es ermöglichen, die Dichtung (28) zu einem vorbestimmten Grad zusammenzudrücken.

13. Vorrichtung nach einem der Ansprüche 1 bis 12, ***dadurch gekennzeichnet, dass*** die Einstellmittel (32) fest mit einem Ende des länglichen Elements (31) verbunden sind.

14. Anlage, die Folgendes beinhaltet:
- mindestens eine Leitung (40), die mindestens eine Öffnung (42) aufweist, und
- mindestens eine Behandlungsvorrichtung (100, 200, 300, 400, 500, 600, 700) nach einem der Ansprüche 1 bis 13.

15. Anlage nach Anspruch 14, ***dadurch gekennzeichnet, dass*** es sich bei der Leitung (40) um eine Leitung handelt, deren Innen- und Außenseiten mit einem Anstrich oder einer Grundierung versehen sind.

16. Anlage nach Anspruch 15, ***dadurch gekennzeichnet, dass*** der Anstrich der Leitung (40) ein Epoxidpolymer-Bindemittel umfasst.

17. Anlage nach einem der Ansprüche 14 bis 16, ***dadurch gekennzeichnet, dass*** es sich bei der Anlage um eine Brandschutzanlage handelt.

## Claims

1. A take-up device (100, 200, 300, 400, 500, 600, 700) intended to be mounted on an opening of a pipeline (40), said device (100, 200, 300, 400, 500, 600, 700) comprising:
- a base (24A-24G) having a through hole (26), and
- a seal (28) intended to seal the connection between the opening of said pipeline (40) and the through hole (26) of said base (24A-24G), such as:
- the one-piece base (24A-24G) further comprises at least two anchoring points (25A-25G), and
- the device (100, 200, 300, 400, 500, 600, 700) comprises at least one clamping collar (30) comprising:
• an elongate element (31, 39) made of a flexible material intended to partially surround the pipeline (40), said elongate element (31, 39) cooperating with the base (24A-24G) at said anchoring points (25A-25G), and
• adjustment means (32), which are independent of the base (24A-24G), enabling the length of the at least one clamping collar (30) to be adapted so that the device (100, 200, 300, 400, 500, 600, 700) is capable of being mounted on pipelines (40) of different diameters ; said adjustment means (32) comprising a clasp (33B) integral with one end of the elongate element (31, 39), said clasp (33B) comprising a housing (35) into which another end of the elongate element (31, 39) is inserted, said other end being displaced by a movement (M4) compressing the elongate element (31, 39) against the pipeline, in order to obtain a desired compressive tension of the elongate element (31, 39); and
• securing means, of the self-tapping screw (34) type and/or a ball contained in a tube with a variable cross-section, inserted into the clasp (33B) in a direction (M5) perpendicular to the length of the housing (35), said securing means being placed so as to restrict the displacements of the elongate element (31, 39) and to maintain said desired compressive tension of the elongate element (31, 39) around the pipeline (40), this tension enabling the device (100, 200, 300, 400, 500, 600, 700) to withstand pressures comprised between 5 and 20 bar and, more precisely, between 8 and 12 bar.

2. The device as claimed in claim 1, ***characterized in that*** the device comprises a single clamping collar (30) and only two anchoring points (25A-25G) disposed on either side of the base (24A-24G).

3. The device as claimed in claim 1 or 2, ***characterized in that*** the anchoring points (25A-25C) are through openings orientated in a direction parallel to the main direction (D) of the pipeline (40), the elongate element (31, 39) being mounted on the base (24A-24C) by inserting at least one end of the elongate element (31, 39) into the through openings and forming a loop around the edges of said base (24A-24C).

4. The device as claimed in claim 3, ***characterized in that*** the through openings are slots provided in the base (24A, 24C).

5. The device as claimed in claim 3, ***characterized in that*** the through openings correspond to the space formed between the base (24B) and a pin of the base (24B).

6. The device as claimed in claim 2, ***characterized in that*** the two ends of the elongate element (31, 39) are configured to cooperate with the anchoring points (25D-25G) disposed on either side of the base (24D-24G) in a manner such that the elongate element (31, 39) partially surrounds the pipeline (40) following action upon the adjustment means (32).

7. The device as claimed in claim 6, ***characterized in that*** each anchoring point (25H-25K) comprises a housing (49) delimited by two lugs (48) separated by a slot proportioned to enable the elongate element (31, 39) to pass through, the housing (49) being intended to receive a pin (47) secured to one end of the elongate element (31, 39), the lugs (48, 50) being intended to enable the pins (47) to be inserted into the housings (49) before action upon the adjustment means (32) and to block the extraction of said pins (47) following action upon the adjustment means (32).

8. The device as claimed in claim 6, ***characterized in that*** each anchoring point (25H-25K) comprises a lug (50) intended to cooperate with a hole provided at the ends of the elongate element (31, 39).

9. The device as claimed in one of claims 1 to 8, ***characterized in that*** the elongate element (31) is a strap.

10. The device as claimed in one of claims 1 to 8, ***characterized in that*** the elongate element (31) is a cable.

11. The device as claimed in one of claims 1 to 8, ***characterized in that*** the elongate element (31) is produced from a metallic material.

12. The device as claimed in any one of claims 1 to 11, ***characterized in that*** the means (32) for adjusting the length of the at least one clamping collar (30) comprise markings enabling the seal (28) to be compressed to a predetermined level.

13. The device as claimed in one of claims 1 to 12, ***characterized in that*** the adjustment means (32) are integral with one end of the elongate element (31).

14. An installation including:
- at least one pipeline (40) with at least one opening (42), and
- at least one take-up device (100, 200, 300, 400, 500, 600, 700) as claimed in one of claims 1 to 13.

15. The installation as claimed in claim 14, ***characterized in that*** the pipeline (40) is a pipeline which has been painted or pre-painted on its inner and outer faces.

16. The installation as claimed in claim 15, ***characterized in that*** the paint of the pipeline (40) comprises an epoxy polymer binder.

17. The installation as claimed in one of claims 14 to 16, ***characterized* in that** the installation is a fire protection installation.
